# EUROPÄISCHE PATENTSCHRIFT

(11) **EP 3 597 997 B1**
(45) Veröffentlichungstag und Bekanntmachung des Hinweises auf die Patenterteilung: **26.05.2021**
(21) Anmeldenummer: 19184564.3
(22) Anmeldetag: 05.07.2019
(51) Int. Cl.: F23D 11/40, F23J 15/06, B60H 1/22, F24H 1/00

(54) **FAHRZEUGHEIZGERÄT**
VEHICLE HEATER
APPAREIL CHAUFFANT POUR VÉHICULE

(30) Priorität: 17.07.2018 DE 102018117213
(43) Veröffentlichungstag der Anmeldung: 22.01.2020
(73) Patentinhaber: Eberspächer Climate Control Systems GmbH, 73730 Esslingen (DE)
(72) Erfinder: Collmer, Andreas, 73773 Aichwald (DE)
(74) Vertreter: Ruttensperger Lachnit Trossin Gomoll

(56) Entgegenhaltungen:
- DE-A1- 3 341 490
- DE-A1- 19 934 488
- DE-A1-102011 081 457

## Beschreibung

Die vorliegende Erfindung betrifft Fahrzeugheizgerät, umfassend einen Brennerbereich mit einer von einer Brennkammerumfangswand umgebenen Brennkammer, ein mit einem ersten Flammrohrende an die Brennkammerumfangswand anschließendes oder/und wenigstens einen Teil der Brennkammerumfangswand bereitstellendes Flammrohr mit einem zum Austritt von Verbrennungsabgas in Richtung einer Flammrohrlängsachse offenen zweiten Flammrohrende, ein Wärmetauschergehäuse mit einer das Flammrohr außen umgebenden Wärmetauschergehäuseumfangswand und einem dem zweiten Flammrohrende axial gegenüberliegenden Wärmetauschergehäuseboden, wobei zwischen einer Außenseite des Flammrohrs und einer Innenseite der Wärmetauschergehäuseumfangswand ein Abgasrückströmraum mit einem Eintrittsbereich am zweiten Flammrohrende und einem Austrittsbereich im Bereich des ersten Flammrohrendes gebildet ist, wobei eine Innenabmessung der Wärmetauschergehäuseumfangswand in Richtung vom Eintrittsbereich des Abgasrückströmraums zum Austrittsbereich des Abgasrückströmraums zunimmt,

Ein derartiges aus der DE 20 2004 015 442 U1 bekanntes Fahrzeugheizgerät ist in den Fig. 1-3 ausschnittsweise dargestellt. Dieses Fahrzeugheizgerät 10 weist einen mit Brennstoff und Verbrennungsluft gespeisten Brennerbereich 12 auf. Ein Brennkammergehäuse 14 des Brennerbereichs 12 umschließt mit einer Brennkammerumfangswand 16 eine Brennkammer 18. An die Brennkammerumfangswand 16 schließt ein zylindrisch gestaltetes Flammrohr 20 an. Das Flammrohr 20 erstreckt sich, ausgehend von seinem an die Brennkammerumfangswand 16 anschließenden ersten Flammrohrende 22, entlang einer Flammrohrlängsachse A und ist an seinem von der Brennkammerumfangswand 16 entfernten zweiten Flammrohrende 24 in Richtung der Flammrohrlängsachse A offen. Ein Wärmetauschergehäuse 26 umgibt das Flammrohr 20 mit einer Wärmetauschergehäuseumfangswand 28 und liegt dem zweiten Flammrohrende 24 mit einem Wärmetauschergehäuseboden 30 axial gegenüber.

Das im Wesentlichen in Richtung der Flammrohrlängsachse A aus der Brennkammer 18 durch eine im Flammrohr 20 getragene Flammenblende 32 hindurch entlang des Flammrohrs 20 strömende Verbrennungsabgas tritt am zweiten Flammrohrende 24 aus dem Flammrohr 20 aus, wird am Wärmetauschergehäuseboden 30 nach radial außen umgelenkt und tritt im Bereich eines Eintrittsbereichs 34 in einen zwischen einer Außenseite 36 des Flammrohrs 20 und einer Innenseite 38 der Wärmetauschergehäuseumfangswand 28 gebildeten Abgasrückströmraum 40 ein. Das im Wesentlichen in Richtung der Flammrohrlängsachse A vom Eintrittsbereich 34 entlang der Außenseite 36 des Flammrohrs 20 strömende Abgas umströmt an der Innenseite 38 der Wärmetauschergehäuseumfangswand 28 vorgesehene, sich in Richtung der Flammrohrlängsachse A erstreckende Wärmeübertragungsrippen 42 und überträgt dabei Wärme auf die Innenseite 38 der Wärmetauschergehäuseumfangswand 28 des Wärmetauschergehäuses 26.

An einer Außenseite des Wärmetauschergehäuses 26 sind von zu erwärmender Luft umströmbare Wärmeübertragungsrippen 46 vorgesehen, so das auch an der Außenseite 44 des Wärmetauschergehäuses 26 eine große Oberfläche zur Wärmeübertragung bereitgestellt ist.

Das im Abgasrückströmraum 40 in Richtung auf das erste Flammrohrende 22 zu strömende Abgas verlässt den Abgasrückströmraum 40 an einem im Bereich des ersten Flammrohrendes 22 gebildeten Austrittsbereich 48 in Richtung zu einem Abgasstutzen 50.

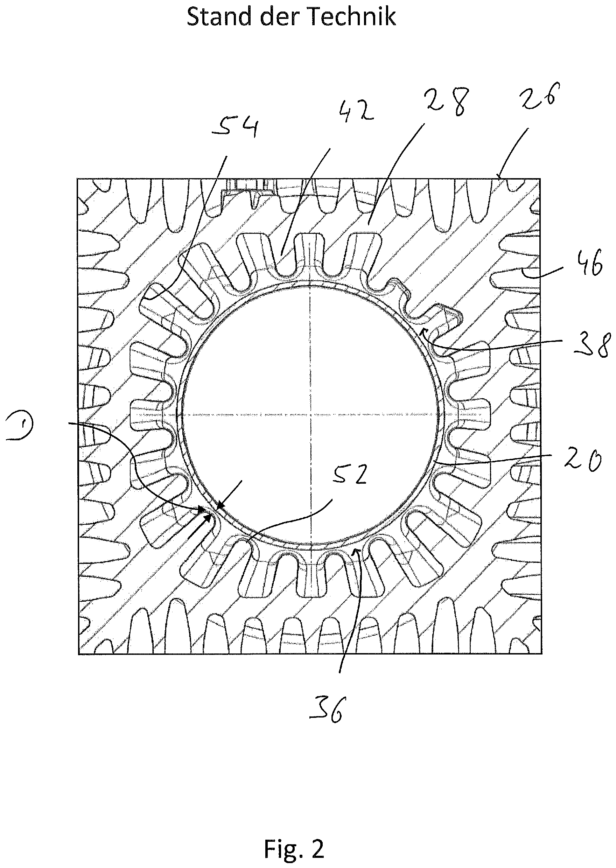

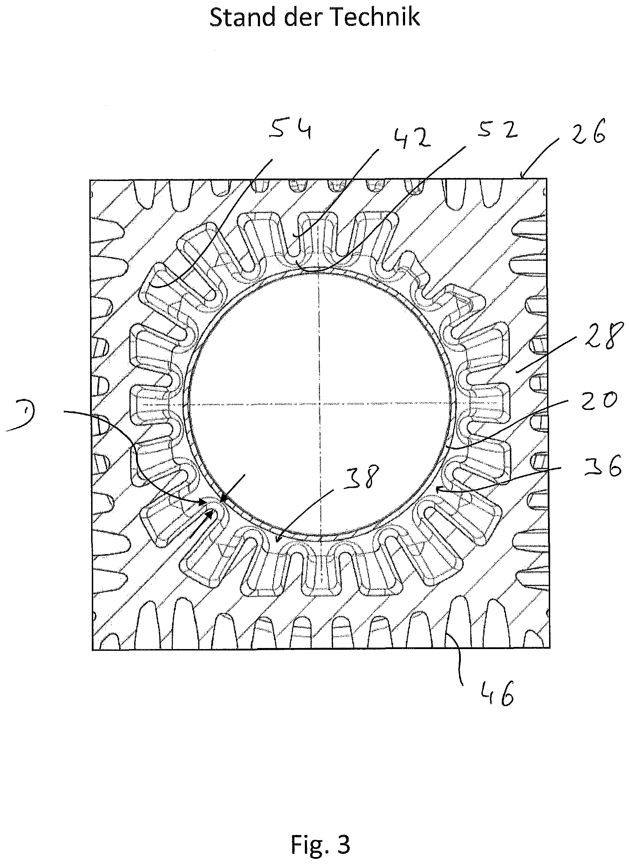

Während das zylindrisch gestaltete Flammrohr 20 als Blechumformteil bereitgestellt werden kann, ist das Wärmetauschergehäuse 26 im Allgemeinen ein Metallgussteil. Um das im Gussverfahren hergestellte Wärmetauschergehäuse 26 nach Durchführung des Gießvorgangs aus den Gießformen entnehmen zu können, ist im Allgemeinen eine Entformungsschräge vorgesehen. Durch das Bereitstellen dieser Entformungsschräge weist das Wärmetauschergehäuse, ausgehend vom Wärmetauschergehäuseboden 30, eine bezüglich dessen Längsachse, welche im Zusammenbau im Wesentlichen der Flammrohrlängsachse A entspricht, zunehmende radiale Abmessung auf, so dass auch der Abstand der Innenseite 38 der Wärmetauschergehäuseumfangswand 28 zur Flammrohrlängsachse A in Richtung vom Wärmetauschergehäuseboden 30 weg zunimmt. Dies gilt sowohl für den Abstand zwischen der Innenseite 38 der Wärmetauschergehäuseumfangswand 28 und der Außenseite 36 des Flammrohrs 20 im Bereich jeweiliger in den Fig. 2 und 3 erkennbarer Scheitel 52 der Wärmeübertragungsrippen 42, als auch für in Umfangsrichtung zwischen jeweils zwei Wärmeübertragungsrippen 42 gebildete Wandungsbereiche 54 der Wärmetauschergehäuseumfangswand 28. Deutlich erkennbar ist dies anhand der in den Fig. 2 und 3 dargestellten Querschnitte in verschiedenen axialen Bereichen des Wärmetauschergehäuses 26 bzw. des in diesem sich erstreckenden Flammrohrs 20. Man erkennt, dass in dem in Fig. 2 dargestellten Querschnitt im Bereich des zweiten Flammrohrendes 24 dieser Abstand D zwischen der Außenseite 36 des Flammrohrs 20 deutlich kleiner ist, als in einem in Fig. 3 dargestellten und dem ersten Flammrohrende 22 bzw. dem Austrittsbereich 48 näher liegenden Längenbereich des Abgasrückströmraums 40.

Ein Fahrzeugheizgerät gemäß dem Oberbegriff des Anspruchs 1 ist aus der DE 10 2011 081 457 A1 bekannt. Das Flammrohr dieses Fahrzeugheizgeräts ist in Richtung zu seinem axial offenen Endbereich sich konisch verjüngend ausgebildet, so dass ein Abstand zwischen einer Außenseite des Flammrohrs und Scheiteln von an einer Wärmetauschergehäuseumfangswand eines Wärmetauschergehäuses nach innen hervorstehenden Wärmeübertragungsrippen in Richtung einer Flammrohrlängsachse im Wesentlichen konstant ist. Die Wärmeübertragungsrippen weisen im Bereich ihrer Scheitel einen Öffnungswinkel bezüglich der Flammrohrlängsachse auf, der kleiner ist, als ein Öffnungswinkel von in Umfangsrichtung zwischen den Wärmeübertragungsrippen liegenden Wandungsbereichen der Wärmetauschergehäuseumfangswand.

Es ist die Aufgabe der vorliegenden Erfindung, ein Fahrzeugheizgerät bereitzustellen, welches eine bessere Wärmeübertragungseffizienz aufweist.

Erfindungsgemäß wird diese Aufgabe gelöst durch ein Fahrzeugheizgerät gemäß Anspruch 1. Dieses Fahrzeugheizgerät umfasst:
- einen Brennerbereich mit einer von einer Brennkammerumfangswand umgebenen Brennkammer,
- ein mit einem ersten Flammrohrende an die Brennkammerumfangswand anschließendes oder/und wenigstens einen Teil der Brennkammerumfangswand bereitstellendes Flammrohr mit einem zum Austritt von Verbrennungsabgas in Richtung einer Flammrohrlängsachse offenen zweiten Flammrohrende,
- ein Wärmetauschergehäuse mit einer das Flammrohr außen umgebenden Wärmetauschergehäuseumfangswand und einem dem zweiten Flammrohrende axial gegenüberliegenden Wärmetauschergehäuseboden, wobei zwischen einer Außenseite des Flammrohrs und einer Innenseite der Wärmetauschergehäuseumfangswand ein Abgasrückströmraum mit einem Eintrittsbereich am zweiten Flammrohrende und einem Austrittsbereich im Bereich des ersten Flammrohrendes gebildet ist, wobei eine Innenabmessung der Wärmetauschergehäuseumfangswand in Richtung vom Eintrittsbereich des Abgasrückströmraums zum Austrittsbereich des Abgasrückströmraums zunimmt.

Dabei ist weiter vorgesehen, dass eine Außenabmessung des Flammrohrs in Richtung vom zweiten Flammrohrende zum ersten Flammrohrende zunimmt.

Da das Flammrohr eine an die zunehmende Innenabmessung des Wärmetauschergehäuses angepasste zunehmende Außenabmessung aufweist, wird das im Abgasrückströmraum strömende Verbrennungsabgas zu einer effizienteren Umströmung der Wärmeübertragungsrippen bzw. der gesamten Innenseite der Wärmetauschergehäuseumfangswand gezwungen, so dass eine verstärkte Wärmeübertragungswechselwirkung zwischen dem Verbrennungsabgas und dem Wärmetauschergehäuse erreicht wird.

Definierte Strömungsverhältnisse werden dadurch unterstützt, dass die Innenabmessung der Wärmetauschergehäuseumfangswand in deren das Flammrohr umgebenden Längenbereich im Wesentlichen konstant zunimmt, und dass die Außenabmessung des Flammrohrs im Wesentlichen konstant zunimmt.

Dadurch, dass gemäß der vorliegenden Erfindung dafür gesorgt ist, dass die Innenabmessung der Wärmetauschergehäuseumfangswand in deren das Flammrohr umgebenden Längenbereich und die Außenabmessung des Flammrohrs in Richtung vom zweiten Flammrohrende zum ersten Flammrohrende mit im Wesentlichen gleicher Rate zunehmen, wird gleichzeitig erreicht, dass in Richtung der Flammrohrlängsachse ein Abstand zwischen der Außenseite des Flammrohrs und der Innenseite der Wärmetauschergehäuseumfangswand im Wesentlichen konstant ist.

Für eine effiziente Wärmeübertragung auf das Wärmetauschergehäuse ist an der Innenseite der Wärmetauschergehäuseumfangswand eine Mehrzahl von im Wesentlichen in Richtung der Flammrohrlängsachse sich erstreckenden, nach radial innen auf die Außenseite des Flammrohrs zu sich erstreckenden Wärmeübertragungsrippen mit der Außenseite des Flammrohrs gegenüberliegenden Scheiteln vorgesehen.

Dabei ist zur Unterstützung definierter Strömungsverhältnisse bei effizienter Umströmung der Wärmeübertragungsrippen vorgesehen, dass die Innenabmessung der Wärmetauschergehäuseumfangswand in deren das Flammrohr umgebenden Längenbereich im Bereich der Scheitel der Wärmeübertragungsrippen im Wesentlichen konstant zunimmt, wobei auch hier ein Radialabstand zwischen der Außenseite des Flammrohrs und den Scheiteln der Wärmeübertragungsrippen zwischen dem zweiten Flammrohrende und dem ersten Flammrohrende im Wesentlichen konstant ist.

Erfindungsgemäß weist die Wärmetauschergehäuseumfangswand an ihrer Innenseite in in größerem Abstand als die Scheitel der Wärmeübertragungsrippen zur Außenseite des Flammrohrs liegenden Wandungsbereichen zwischen in Umfangsrichtung benachbarten Wärmeübertragungsrippen den gleichen Öffnungswinkel bezüglich der Flammrohrlängsachse auf, wie in den Scheiteln der Wärmeübertragungsrippen.

Beispielsweise kann für eine effiziente Umströmung der Wärmeübertragungsrippen bei gleichwohl bestehender Möglichkeit für einen einfachen Zusammenbau vorgesehen sein, dass der Radialabstand zwischen der Außenseite des Flammrohrs und den Scheiteln der Wärmeübertragungsrippen im Bereich von 0,8 mm bis 1,4 mm, vorzugsweise im Bereich von 1 mm bis 1,2 mm, ist.

Die Wärmetauschergehäuseumfangswand kann an ihrer Innenseite bezüglich der Flammrohrlängsachse einen Öffnungswinkel im Bereich von 0,5° bis 1,5°, vorzugsweise etwa 1°, aufweisen, und das Flammrohr an seiner Außenseite 5 bezüglich der Flammrohrlängsachse einen Öffnungswinkel im Bereich von 0,5° bis 1,5°, vorzugsweise etwa 1°, aufweisen. Es ist hier darauf hinzuweisen, dass erfindungsgemäß eine derartige Übereinstimmung der Öffnungswinkel für diejenigen Bereiche der Innenseite der Wärmetauschergehäuseumfangswand vorhanden ist, in welchen Wärmeübertragungsrippen vorgesehen sind, so dass ein derartiger Öffnungswinkel jeweils an den Scheitelbereichen der Wärmeübertragungsrippen betrachtet werden kann. Gleichermaßen ist ein derartiger Öffnungswinkel bzw. eine derartige Übereinstimmung der Öffnungswinkel auch in Bereichen der Wärmetauschergehäuseumfangswand zwischen in Umfangsrichtung benachbarten Wärmeübertragungsrippen vorgesehen.

Das Wärmetauschergehäuse ist aus Festigkeitsgründen ein Metallgussbauteil, und das Flammrohr kann für einen einfach zu realisierenden Aufbau ein durch Umformen eines plattenartigen Blechrohlings in eine im Wesentlichen kegelstumpfartige Gestalt und Verbinden des in die im Wesentlichen kegelstumpfartige Gestalt umgeformten Blechrohlings an einander gegenüberliegenden Längsrandbereichen bereitgestellter Metallblechkörper sein.

Die vorliegende Erfindung wird nachfolgend mit Bezug auf die beiliegenden Figuren detailliert beschrieben. Es zeigt:
- Fig. 1: eine Teil-Längsschnittansicht eines aus dem Stand der Technik bekannten Fahrzeugheizgeräts;
- Fig. 2: eine Querschnittansicht des Fahrzeugheizgeräts der Fig. 1, geschnitten längs einer Linie II-II in Fig. 1;
- Fig. 3: eine Querschnittansicht des Fahrzeugheizgeräts der Fig. 1, geschnitten längs einer Linie III-III in Fig. 1;
- Fig. 4: eine der Fig. 1 entsprechende Darstellung eines gemäß den Prinzipien der vorliegenden Erfindung aufgebauten Fahrzeugheizgeräts;
- Fig. 5: eine Querschnittansicht des Fahrzeugheizgeräts der Fig. 4, geschnitten längs einer Linie V-V in Fig. 4;
- Fig. 6: eine Querschnittansicht des Fahrzeugheizgeräts der Fig. 4, geschnitten längs einer Linie VI-VI in Fig. 4;
- Fig. 7: in prinzipartiger Darstellung eine Längsschnittansicht des Wärmetauschergehäuses und des darin sich erstreckenden Flammrohrs zur Veranschaulichung verschiedener Öffnungswinkel bezüglich einer Flammrohrlängsachse.

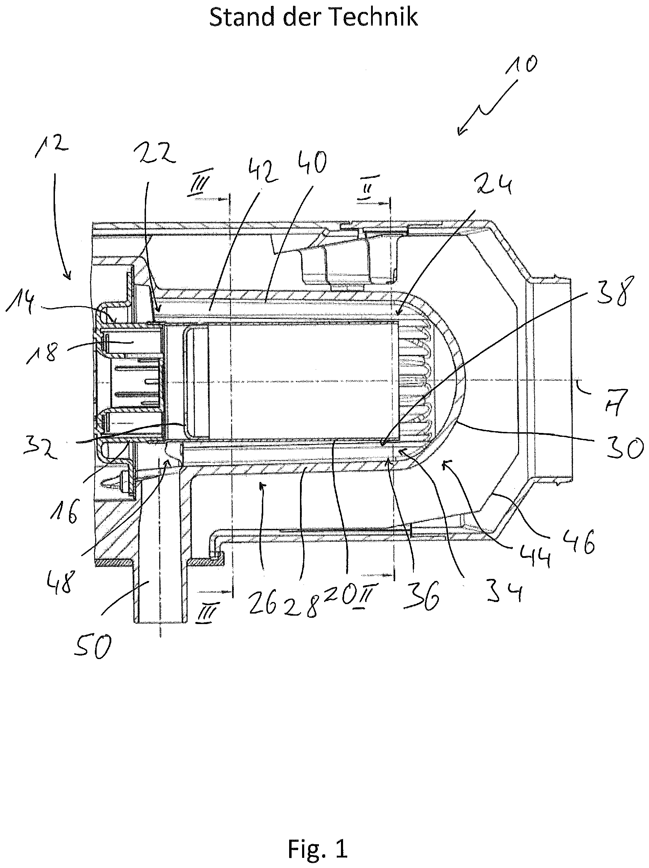

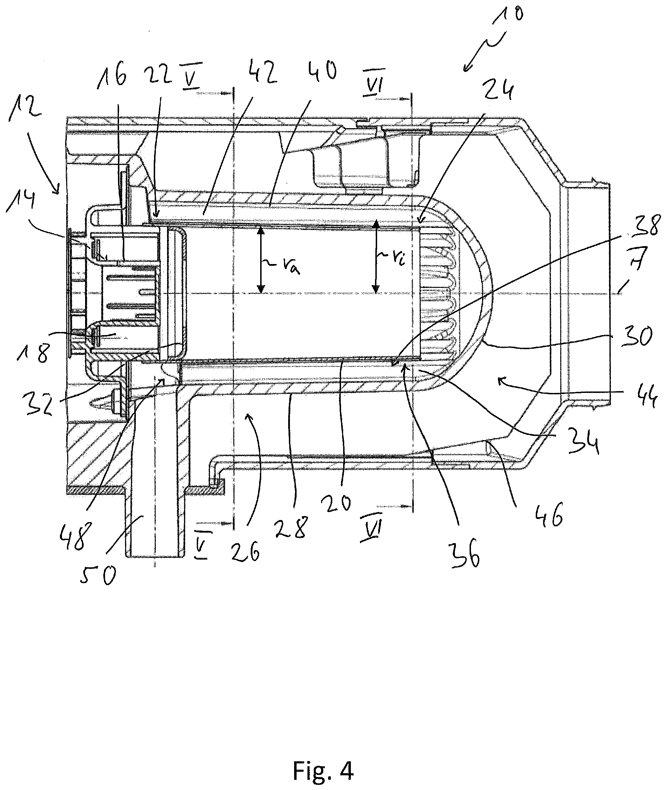

Nachfolgend werden mit Bezug auf die Fig. 4 bis 7 die Prinzipien der vorliegenden Erfindung anhand eines Aufbaus erläutert, die hinsichtlich seiner grundsätzlichen Ausgestaltung dem vorangehend mit Bezug auf die Fig. 1 bis 3 beschriebenen Aufbau entspricht. Es wird daher hinsichtlich des grundsätzlichen Aufbaus des Fahrzeugheizgeräts auf die voranstehenden Ausführungen zu den Fig. 1 bis 3 verwiesen. In der folgenden Beschreibung der in den Fig. 4 bis 7 dargestellten Ausgestaltung eines Fahrzeugheizgeräts sind Komponenten bzw. Baugruppen, welche vorangehend mit Bezug auf die Fig. 1 bis 3 beschriebenen Komponenten bzw. Baugruppen hinsichtlich Aufbau bzw. Funktion entsprechen, mit den gleichen Bezugszeichen bezeichnet.

Abweichend von dem aus dem Stand der Technik bekannten und mit Bezug auf die Fig. 1 bis 3 beschriebenen Aufbau eines Fahrzeugheizgeräts 10, ist bei dem erfindungsgemäßen Fahrzeugheizgerät 10 das Flammrohr 20 nicht mit in Richtung der Flammrohrlängsachse A zylindrischem Aufbau bereitgestellt, sondern in Richtung der Flammrohrlängsachse A vom ersten Flammrohrende 22 zum zweiten Flammrohrende 24 sich konisch bzw. kegelstumpfartig verjüngend. Dies bedeutet, dass die von Verbrennungsabgas durchströmbare Innenquerschnittsfläche des Flammrohrs 20 in Richtung vom ersten Flammrohrende 22 zum zweiten Flammrohrende 24 abnimmt. Entsprechend nimmt die Außenabmessung, also beispielsweise der bezüglich der Flammrohrlängsachse A gemessene Außenradius r_{a,} ausgehend vom zweiten Flammrohrende 24 in Richtung zum ersten Flammrohrende 22 hin zu. Es sei hier darauf hingewiesen, dass beispielsweise mit seinem ersten Flammrohrende 22 das Flammrohr 20 über das axiale Ende der Brennkammerumfangswand 16 geführt und daran beispielsweise durch Verschweißen festgelegt sein kann und somit das Flammrohr beispielsweise mit seinem zwischen der Brennkammerumfangswand 16 und der Flammblende 22 liegenden Längenbereichen auch einen Teil der die Brennkammer radial außen umschließenden Umfangswand bereitstellen kann.

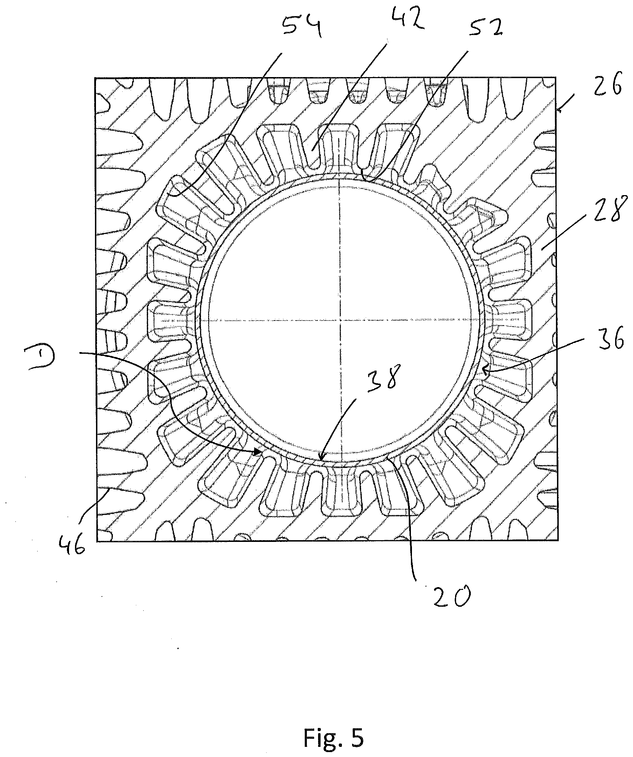

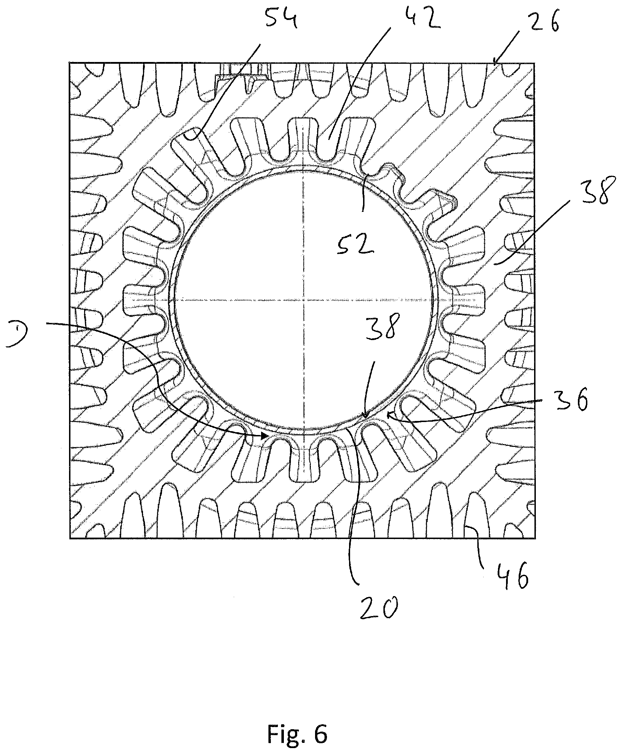

Die Veränderung der Außenabmessung des Flammrohrs 20 ist in Bezug auf die Veränderung der Innenabmessung des Wärmetauschergehäuses 26 so gewählt, dass zwischen der Außenseite 36 des Flammrohrs 20 und der Innenseite 38 des Wärmetauschergehäuses 26 bzw. der Wärmetauschergehäuseumfangswand 28, wie dies anhand des in den Fig. 5 und 6 dargestellten Radialabstands D veranschaulicht ist, im gesamten von der Wärmetauschergehäuseumfangswand 28 umgebenen Längenbereich des Flammrohrs 20 im Wesentlichen konstant ist. Es sei an dieser Stelle darauf hingewiesen, dass als Innenabmessung des Wärmetauschergehäuses 26 bzw. der Wärmetauschergehäuseumfangswand 28 beispielsweise der bezüglich der Flammrohrlängsachse A betrachtete Innenradius rᵢ berücksichitgt werden kann. Der Außenradius rₐ des Flammrohrs 20 und der Innenradius rᵢ der Wärmetauschergehäuseumfangswand 28 im Bereich der Scheitel 52 der Wärmeübertragungsrippen 42 verändern sich in Richtung der Flammrohrlängsachse A vorzugsweise im Wesentlichen konstant und mit gleicher Rate, so dass auch im gesamten vom Wärmetauschergehäuse 26 umgebenen Längenbereich des Flammrohrs 20 der Abstand D zwischen den Scheiteln 52 der Wärmeübertragungsrippen 42 und der Außenseite 36 des Flammrohrs 20 im Wesentlichen konstant ist und bei beispielsweise 1 mm bis 1,2 mm liegen kann. Auf diese Art und Weise wird ein in Richtung zum Austrittsbereich 48 zunehmender Radialabstand zwischen dem Wärmetauschergehäuse 26 und dem Flammrohr 20 vermieden und eine verbesserte Umströmung des Wärmetauschergehäuses 26 durch das im Abgasrückströmraum 40 strömende Verbrennungsabgas erzwungen.

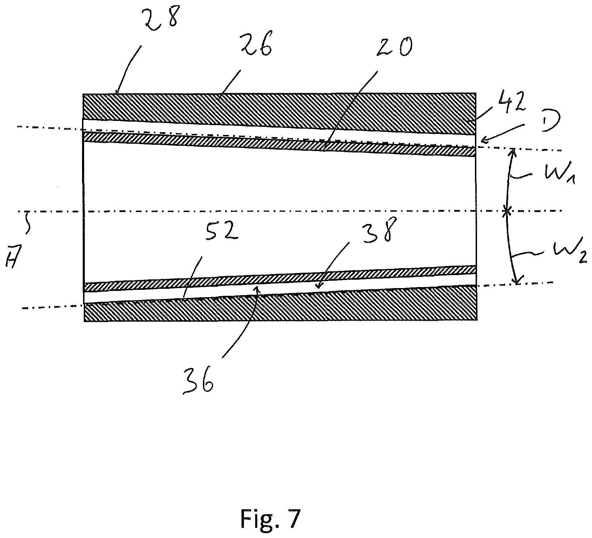

Die Fig. 7 veranschaulicht, dass dies dadurch erreicht wird, dass ein Öffnungswinkel W₁ der Außenseite 36 des Flammrohrs 20 bezüglich der Flammrohrlängsachse A und ein Öffnungswinkel W₂ der Innenseite 38 der Wärmetauschergehäuseumfangswand 28, beispielsweise gemessen im Bereich der Scheitel 52 der Wärmeübertragungsrippen 42, zueinander im Wesentlichen gleich sind und bei beispielsweise etwa 1° liegen.

Es sei hier darauf hingewiesen, dass der Öffnungswinkel W₂ auch gemessen wird an den bezüglich der Flammrohrlängsachse A in größerem Abstand zur Außenseite 36 des Flammrohrs 20 liegenden Wandungsbereichen 54 der Wärmetauschergehäuseumfangswand 28. In diesen Wandungsbereichen 54 ist zumindest im Wesentlichen im gesamten das Flammrohr 20 axial überdeckenden Bereich die Wärmetauschergehäuseumfangswand 28 der gleiche Öffnungswinkel bezüglich der Flammrohrlängsachse A vorgesehen, wie an den Scheiteln 52 der Wärmeübertragungsrippen 42, was wiederum bedeutet, dass in diesem Längenbereich die Wärmeübertragungsrippen 42 eine näherungsweise konstante Vorsprungshöhe nach radial innen aufweisen.

Das Fahrzeugheizgerät 10 wird mit dem in den Fig. 4 bis 7 dargestellten Aufbau in einfacher Weise dadurch bereitgestellt, dass, wie vorangehend bereits erläutert, das Wärmetauschergehäuse 26 als Metallgussbautei bereitgestellt wird. Das Flammrohr 20 kann als Metallblechkörper dadurch bereitgestellt werden, dass ein ebener Blechrohling mit näherungsweise trapezartiger Umfangskontur erzeugt wird und dieser zu einer kegelstumpfartigen Gestalt umgeformt bzw. gerollt wird, wobei dann einander radial überlappende oder in Umfangsrichtung gegenüberliegende Randbereiche des umgeformten Blechrohlings durch Verschweißen miteinander verbunden werden. Der so geformte Metallblechkörper kann dann mit seinem ersten Flammrohrende 22 über das axiale Ende der Brennkammerumfangswand 16 geschoben und daran festgelegt werden.

Abschließend ist darauf hinzuweisen, dass fertigungsbedingte Variationen in Bauteilabmessungen grundsätzlich nicht vermieden werden können und insofern auch nicht ausgeschlossen werden kann, dass bei einem erfindungsgemäß aufgebauten Fahrzeugheizgerät eine Abweichung bzw. Variation des Radialabstandes zwischen der Außenseite des Flammenrohrs und der Innenseite der Wärmetauschergehäuseumfangswand entlang des Abgasrückströmraums auftritt. Im Sinne der vorliegenden Erfindung wird eine derartige Variation im Radialabstand bzw. ein Unterschied im Öffnungswinkel als vernachlässigbar betrachtet bzw. der Radialabstand als im Wesentlichen konstant betrachtet und die beiden Öffnungswinkel als im Wesentlichen gleich betrachtet, wenn eine Variation bzw. eine Abweichung einen Betrag von etwa 10 % beispielsweise des Radialabstandes am Eintrittsbereich oder des Öffnungswinkels des Flammrohrs nicht übersteigt.

## Patentansprüche

1. Fahrzeugheizgerät, umfassend:
- einen Brennerbereich (12) mit einer von einer Brennkammerumfangswand (16) umgebenen Brennkammer (18),
- ein mit einem ersten Flammrohrende (22) an die Brennkammerumfangswand (16) anschließendes oder/und wenigstens einen Teil der Brennkammerumfangswand (16) bereitstellendes Flammrohr (20) mit einem zum Austritt von Verbrennungsabgas in Richtung einer Flammrohrlängsachse (A) offenen zweiten Flammrohrende (24),
- ein als Metallgussbauteil ausgebildetes Wärmetauschergehäuse (26) mit einer das Flammrohr (20) außen umgebenden Wärmetauschergehäuseumfangswand (28) und einem dem zweiten Flammrohrende (24) axial gegenüberliegenden Wärmetauschergehäuseboden (30), wobei zwischen einer Außenseite (36) des Flammrohrs (20) und einer Innenseite (38) der Wärmetauschergehäuseumfangswand (28) ein Abgasrückströmraum (40) mit einem Eintrittsbereich (34) am zweiten Flammrohrende (24) und einem Austrittsbereich (48) im Bereich des ersten Flammrohrendes (22) gebildet ist, wobei an der Innenseite (38) der Wärmetauschergehäuseumfangswand (28) eine Mehrzahl von in Richtung der Flammrohrlängsachse (A) sich erstreckenden, nach radial innen auf die Außenseite (36) des Flammrohrs (20) zu sich erstreckenden Wärmeübertragungsrippen (42) mit der Außenseite des Flammrohrs (20) gegenüberliegenden Scheiteln (52) vorgesehen ist, wobei eine Innenabmessung (n) der Wärmetauschergehäuseumfangswand (28) in Richtung vom Eintrittsbereich (34) des Abgasrückströmraums (40) zum Austrittsbereich (48) des Abgasrückströmraums (40) zunimmt, wobei die Innenabmessung (n) der Wärmetauschergehäuseumfangswand (28) in deren das Flammrohr (20) umgebenden Längenbereich im Bereich der Scheitel (52) der Wärmeübertragungsrippen (42) im Wesentlichen konstant zunimmt, wobei eine Außenabmessung (rₐ) des Flammrohrs (20) in Richtung vom zweiten Flammrohrende (24) zum ersten Flammrohrende (22) im Wesentlichen konstant zunimmt, so dass in Richtung der Flammrohrlängsachse (A) ein Radialabstand (D) zwischen der Außenseite (36) des Flammrohrs (20) und der Innenseite (38) der
Wärmetauschergehäuseumfangswand (28) im Wesentlichen konstant ist, **dadurch gekennzeichnet, dass** die Wärmetauschergehäuseumfangswand (28) an ihrer Innenseite (38) in in größerem Abstand als die Scheitel (52) der Wärmeübertragungsrippen (42) zur Außenseite (36) des Flammrohrs (20) liegenden Wandungsbereichen (54) zwischen in Umfangsrichtung benachbarten Wärmeübertragungsrippen (42) den gleichen Öffnungswinkel bezüglich der Flammrohrlängsachse (A) aufweist, wie in den Scheiteln (52) der Wärmeübertragungsrippen (42).

2. Fahrzeugheizgerät nach Anspruch 1, **dadurch gekennzeichnet, dass** der Radialabstand (D) zwischen der Außenseite (36) des Flammrohrs (20) und den Scheiteln (52) der Wärmeübertragungsrippen (45) im Bereich von 0,8 mm bis 1,4 mm, vorzugsweise im Bereich von 1 mm bis 1,2 mm, ist.

3. Fahrzeugheizgerät nach einem der vorangehenden Ansprüche, **dadurch gekennzeichnet, dass** die Wärmetauschergehäuseumfangswand (28) an ihrer Innenseite (36) bezüglich der Flammrohrlängsachse (A) einen Öffnungswinkel (W₂) im Bereich von 0,5° bis 1,5°, vorzugsweise etwa 1°, aufweist, und dass das Flammrohr (20) an seiner Außenseite (36) bezüglich der Flammrohrlängsachse (A) einen Öffnungswinkel (W₁) im Bereich von 0,5° bis 1,5°, vorzugsweise etwa 1°, aufweist.

4. Fahrzeugheizgerät nach einem der vorangehenden Ansprüche, **dadurch gekennzeichnet, dass** das Flammrohr (20) ein durch Umformen eines plattenartigen Blechrohlings in eine im Wesentlichen kegelstumpfartige Gestalt und Verbinden des in die im Wesentlichen kegelstumpfartige Gestalt umgeformten Blechrohlings an einander gegenüberliegenden Längsrandbereichen bereitgestellter Metallblechkörper ist.

## Claims

1. Vehicle heating device, comprising:
- a burner area (12) with a combustion chamber (18) enclosed by a combustion chamber circumferential wall (16),
- a flame tube (20) with a first flame tube end (22) adjoining the combustion chamber circumferential wall (16) or/and providing at least a part of the combustion chamber circumferential wall (16) and with a second flame tube end (24) open in the direction of a flame tube longitudinal axis (A) for the discharge of combustion waste gas,
- a heat exchanger housing (26) formed as a metal cast component with a heat exchanger housing circumferential wall (28) enclosing the flame tube (20) on the outside and with a heat exchanger housing bottom (30) located axially opposite the second flame tube end (24), wherein a waste gas backflow space (40) with an inlet area (34) at the second flame tube end (24) and with an outlet area (48) in the area of the first flame tube end (22) is formed between an outer side (36) of the flame tube (20) and an inner side (38) of the heat exchanger housing circumferential wall (28), wherein on the inner side (38) of the heat exchanger housing circumferential wall (28), a plurality of heat transfer ribs (42), which extend in the direction of the flame tube longitudinal axis (A) and extend radially inwards towards the outer side (36) of the flame tube (20), are provided with apices (52) located opposite the outer side (26) of the flame tube (20), wherein an inner dimension (rᵢ) of the heat exchanger housing circumferential wall (28) increases in the direction from the inlet area (34) of the waste gas backflow space (40) to the outlet area (48) of the waste gas backflow space (40), wherein the inner dimension (rᵢ) of the heat exchanger housing circumferential wall (28) essentially increases constantly in the length area thereof, which encloses the flame tube (20), in the area of the apices (52) of the heat transfer ribs (42), wherein an outer dimension (rₐ) of the flame tube (20) increases essentially constantly in the direction from the second flame tube end (24) to the first flame tube end (22) so that a radial distance (D) between the outer side (36) of the flame tube (20) and the inner side (36) of the heat exchanger housing circumferential wall (28) is essentially constant in the direction of the flame tube longitudinal axis (A), **characterized in that** the heat exchanger housing circumferential wall (28) comprises at its inner side (38) in wall areas (54) located with a greater distance to the outside (36) of the flame tube (20) than the apices (52) of the heat transfer ribs (42) between heat transfer ribs (42) adjacent in the circumferential direction the same opening angle in relation to the flame tube longitudinal axis (A) as in the apices (52) of the heat transfer ribs (42).

2. Vehicle heating device in accordance with claim 1, **characterized in that** the radial distance (D) between the outer side (36) of the flame tube (20) and the apices (52) of the heat transfer ribs (45) is in the range of 0.8 mm to 1.4 mm, preferably in the range of 1 mm to 1.2 mm.

3. Vehicle heating device in accordance with one of the above claims, **characterized in that** the heat exchanger housing circumferential wall (28) has an opening angle (W₂) in the range of 0.5° to 1.5°, preferably about 1°, on its inner side (36) in relation to the flame tube longitudinal axis (A), and that the flame tube (20) has an opening angle (W₁) in the range of 0.5° to 1.5°, preferably about 1°, on its outer side (36) in relation to the flame tube longitudinal axis (A).

4. Vehicle heating device in accordance with one of the above claims, **characterized in that** the flame tube (20) is a sheet metal body provided by forming a plate-like sheet metal blank into an essentially truncated cone-like shape and connecting the sheet metal blank formed into the essentially truncated cone-like shape at longitudinal edge areas located opposite one another.

## Revendications

1. Dispositif de chauffage pour véhicule, comprenant :
- une zone de brûleur (12) avec une chambre de combustion (18) entourée par une paroi périphérique de chambre de combustion (16),
- un tube de flamme (20) avec une première extrémité de tube de flamme (22) se raccordant à la paroi périphérique de la chambre de combustion (16) ou/et constituant au moins une partie de la paroi périphérique de la chambre de combustion (16) et avec une deuxième extrémité de tube de flamme (24) ouverte dans la direction d'un axe longitudinal du tube de flamme (A) pour l'évacuation des gaz résiduels de combustion,
- un boîtier d'échangeur de chaleur (26) formé comme un composant métallique moulé avec une paroi circonférentielle de boîtier d'échangeur de chaleur (28) entourant le tube de flamme (20) sur l'extérieur et avec un fond de boîtier d'échangeur de chaleur (30) situé axialement à l'opposé de la seconde extrémité de tube de flamme (24), dans lequel un espace de reflux des gaz d'échappement (40) avec une zone d'entrée (34) au niveau de la seconde extrémité du tube de flamme (24) et avec une zone de sortie (48) dans la zone de la première extrémité du tube de flamme (22) est formé entre un côté extérieur (36) du tube de flamme (20) et un côté intérieur (38) de la paroi circonférentielle de boîtier d'échangeur de chaleur (28), dans lequel, sur le côté intérieur (38) de la paroi circonférentielle de boîtier d'échangeur (28) de chaleur, une pluralité de nervures de transfert de chaleur (42), qui s'étendent dans la direction de l'axe longitudinal (A) du tube de flamme et s'étendent radialement vers l'intérieur en direction du côté extérieur (36) du tube de flamme (20), sont pourvues de sommets (52) situés à l'opposé du côté extérieur (26) du tube de flamme (20), dans lequel une dimension intérieure (rᵢ) de la paroi circonférentielle de boîtier d'échangeur de chaleur (28) augmente dans la direction allant de la zone d'entrée (34) de l'espace de reflux des gaz d'échappement (40) à la zone de sortie (48) de l'espace de reflux des gaz d'échappement (40), dans lequel la dimension intérieure (rᵢ) de la paroi circonférentielle de boîtier d'échangeur de chaleur (28) augmente essentiellement de manière constante dans la zone de sa longueur, qui entoure le tube de flamme (20), dans la zone des sommets (52) des nervures de transfert de chaleur (42), dans lequel une dimension extérieure (rₐ) du tube de flamme (20) augmente essentiellement de manière constante dans la direction allant de la seconde extrémité du tube de flamme (24) à la première extrémité du tube de flamme (22), de sorte qu'une distance radiale (D) entre le côté extérieur (36) du tube de flamme (20) et le côté intérieur (36) de la paroi circonférentielle de boîtier d'échangeur de chaleur (28) est essentiellement constante dans la direction de l'axe longitudinal du tube de flamme (A), **caractérisé en ce que** la paroi circonférentielle de boîtier d'échangeur de chaleur (28) comprend, sur son côté intérieur (38), des zones de paroi (54) situées à une plus grande distance de l'extérieur (36) du tube de flamme (20) que les sommets (52) des nervures de transfert de chaleur (42) entre les nervures de transfert de chaleur (42) adjacentes dans la direction circonférentielle, le même angle d'ouverture par rapport à l'axe longitudinal (A) du tube de flamme que dans les sommets (52) des nervures de transfert de chaleur (42).

2. Dispositif de chauffage de véhicule selon la revendication 1, **caractérisé en ce que** la distance radiale (D) entre le côté extérieur (36) du tube de flamme (20) et les sommets (52) des nervures de transfert de chaleur (45) est dans la gamme de 0,8 mm à 1,4 mm, de préférence dans la gamme de 1 mm à 1,2 mm.

3. Dispositif de chauffage de véhicule selon l'une des revendications précédentes, **caractérisé en ce que** la paroi circonférentielle de boîtier d'échangeur de chaleur (28) présente un angle d'ouverture (W₂) compris entre 0,5° et 1,5°, de préférence environ 1°, sur son côté intérieur (36) par rapport à l'axe longitudinal (A) du tube de flamme, et **en ce que** le tube de flamme (20) présente un angle d'ouverture (Wi) compris entre 0,5° et 1,5°, de préférence environ 1°, sur son côté extérieur (36) par rapport à l'axe longitudinal (A) du tube de flamme.

4. Dispositif de chauffage de véhicule selon l'une des revendications précédentes, **caractérisé en ce que** le tube de flamme (20) est un corps en tôle qui est obtenu en donnant à une ébauche de tôle en forme de plaque une forme essentiellement tronconique et en reliant l'ébauche de tôle formée en forme essentiellement tronconique au niveau de zones de bord longitudinal situées à l'opposé l'une de l'autre.
